# EUROPEAN PATENT SPECIFICATION

(11) **EP 3 139 076 B1**
(45) Date of publication and mention of the grant of the patent: **06.06.2018**
(21) Application number: 16186409.5
(22) Date of filing: 30.08.2016
(51) Int. Cl.: F16L 25/00, F23J 13/04, F16L 37/091

(54) **A DUCT WITH A CONNECTION SYSTEM BETWEEN MODULES FOR THE EVACUATION OF FUMES**
EINE LEITUNG MIT EINEM VERBINDUNGSSYSTEM ZWISCHEN MODULEN ZUR EVAKUIERUNG VON RAUCHGASEN
UN CONDUIT AVEC UN SYSTEME DE CONNECTION ENTRE MODULES POUR L'EVACUATION DE FUMES

(30) Priority: 02.09.2015 IT UB20153342
(43) Date of publication of application: 08.03.2017
(73) Proprietor: Camini Wierer S.r.l., 37055 Ronco all'Adige (Verona) (IT)
(72) Inventor: WIERER, Christian, 25015 Desenzano del Garda (Brescia) (IT)
(74) Representative: Anselmi, Davide

(56) References cited:
- EP-A1- 2 626 610
- DE-U1- 29 901 529
- US-A1- 2007 246 936
- US-B1- 6 499 771

## Description

### TECHNICAL FIELD

This invention relates to a duct comprising a system of connection between the modules for the evacuation of fumes and/or for the passage of a gas, such as air or the like. More specifically, it should be noted that the passage of fumes and/or other gases may be forced (for example, by a fumes extraction fan) or not.

In the preferred case (but not exclusive), this invention is used for the evacuation of fumes deriving from combustion and/or for the extraction of kitchen vapours (for example, coming from the hood kitchen) and/or for the ventilation of spaces and/or for the extraction of fumes in the case of fires.

More specifically, the invention relates to a connection system which can be used to retain mutually and safely the generally cylindrical modules which are connected to each other in succession to form a duct for extracting a gas preferably designed for discharging fumes.

The system according to the invention aims to overcome the traditional problems regarding, on the one hand, the difficult reciprocal sealing of the modules which make up the ducts for extracting fumes and, on the other hand, the impossibility of separating them following installation, for example due to incorrect installation operations, or for maintenance or demolition.

This invention can be advantageously applied to the building sector and especially in the field of extraction devices for fumes or for the passage of other gases in order extract them towards the outside.

### BACKGROUND ART

It is known that in the building sector and in the civil or industrial construction sectors or for certain working processes in which heat is required, means are used which produce fumes that must be evacuated outside the rooms, so that they are discharged into the atmosphere.

Currently, the systems for the evacuation of fumes comprise a flue consisting of a generally vertical duct (or also with some curved parts) having the purpose of collecting and expelling, at a suitable height above the ground, the fumes or other gases.

Generally, the flue is made using various types of discharge ducts, one of the most commonly used of which consisting of ducts made by the multiple and reciprocal joining of portions of ducts generally circular and made of stainless steel, positioned one above the other by the consecutive insertion of several elements in succession, in such a way as to facilitate the steps for storage, transport and assembly of the product.

The various portions of ducts are joined together using various types of couplings, in the simplest of which the sections of the pipes are equal to each other, the lower and upper parts having conical countersinks with the same tapers which are recessed or protruding with respect to the tubular surface, forming a male end with a smaller diameter which fits into the female end with a larger diameter.

Generally speaking, the female ends are positioned in the upper part of each section, whereas the male ends are positioned in the lower part, in such a way that the male end is installed by lowering from above the upper portion on the lower female portion.

This arrangement allows a good seal against the dispersion of fumes and any formation of condensate or other infiltrations tend to flow towards the inside of the duct, avoiding dispersions which in turn and in the long run could damage the discharge duct, triggering hazardous corrosion phenomena. Document DE29901529U discloses a tube with corrugated-sector walls composed of several radially outward-projecting corrugations, and is in the form of a rollout string of alternating smooth sectors and corrugated sectors of about the same length and with a constant internal diameter. The external diameter of the smooth sectors corresponds to the internal diameter of a socket of a socket pipe. The socket is provided with a channel-like annular recess to accommodate a sealing ring and a spring ring. According to the solution described in document DE20108840U, the duct for passage of fumes consists of a series of respective quick-connection pipes made of corrosion resistant material, wherein the upper part of the lower pipe has a wide cross section forming a sleeve around the upper pipe with a smaller diameter. In this case, the upper pipe also has two or more raised rings which make it possible to improve the seal with the inner surface of the lower pipe, avoiding the release. Alternatively, the inner face of the lower pipe has rings which form a seal which grips against the flat cylindrical surface of the upper pipe.

This solution has means which theoretically improve the seal between the tubular portions coupled to each other, however it has the drawback of making practically impossible the release of the sliding members if the duct has been incorrectly positioned during the installation steps or it is necessary to replace or repair any damaged portions.

According to the solution described in patent document FR2004891, a coupling is used for pipes for discharging fumes in which there is a male end which is introduced in the female end of the adjacent pipe, where the male end of each pipe has a diameter smaller than the body where protrusions are provided designed to retain the female part of the adjacent pipe.

Also in this case the seal between the sections may be sufficient but it is practically impossible to release any portion of tubular element from another if necessary.

Lastly, according to the solution EP2626610 the discharge duct consists of a series of cylindrical portions each of which engages mutually in the other in a connection area consisting of male and female couplings, but in this case the male portion is equipped with an annular groove recessed towards the inside in which is housed a crown equipped with tabs which protrude towards the outside to interfere against the walls of the female tubular element.

The arrangement of the tabs is such as to allow the introduction of the female tubular portion on the male tubular portion in which the crown is inserted and prevent it from detaching, guaranteeing a certain degree of seal.

In effect, these tabs are located on the male part of the tubular modules and face the opposite direction relative to the direction of introduction of the male component in the adjacent female portion, forming a sort of anti-return latch which is able to hold the parts assembled.

The problem found with the use of these solutions is, in short, that relative to the irreversibility of the connection between one component and another, in the sense that once the male components are inserted in the female components the latch formed by the locking tabs makes detachment difficult after the installation step, for example, if the installation has not been performed perfectly with axial alignment, or in the case of maintenance or replacement of one or more of the tubular components fitted consecutively in each other.

### DESCRIPTION OF THE INVENTION

The aim of this invention is to provide a duct with a connection system between modules for the evacuation of fumes and/or gases which comprises reversible retaining means thereby creating a condition which is able to eliminate the above-mentioned drawbacks.

More specifically, the aim of the invention is to provide a connection system between modules for the evacuation of fumes and/or gases which comprises a retaining and locking system which is releasable when necessary by using suitable release means.

This is achieved by means of a duct with a connection system between modules for the evacuation of fumes and/or gases the features of which are described in claim 1. The dependent claims of the solution according to this invention describe advantageous embodiments of the invention.

The main advantages of this solution relate to the fact that the connection system according to the invention comprises a plurality of tubular elements each of which is provided with a male end on one side and female end on the other, wherein the male end comprises a series of annular corrugations and the female end comprises at least one groove in which is inserted a crown provided with constraining means consisting of tabs facing towards the direction for inserting the male end, preventing the return in the direction of detachment.

Moreover, according to the invention, the constraining means can be intercepted by a further release clamp located on the male ends of each tubular component which is subjected to movement along the longitudinal axis of the duct for passage of the fumes, to move from a dis-inserted position to an inserted position in the gap between the male component and the female component, intercepting the tabs which can be released allowing the withdrawal of the tubular elements in question.

### DESCRIPTION OF THE DRAWINGS

Other features and advantages of the invention will become clear on reading the description given below of one embodiment, provided as a non-limiting example, with the help of the accompanying drawings, in which:
- Figure 1 is a schematic and perspective view partly in cross section of the male end of a modular tubular element according to the invention which represents one of the elements which together with other similar elements forms a duct for extracting fumes;
- Figure 2 is a schematic view of the male end of Figure 1 on which an annular release clamp is mounted;
- Figure 3 shows the view of a female end of a modular tubular element equipped with a lock crown positioned inside a groove;
- Figure 4 is the schematic and perspective view partly in cross section which highlights the joining between the male and female ends;
- Figure 5 is the perspective view partly in cross section of a lock crown located in a special annular seat of the female end of each tubular element;
- Figure 6 illustrates a detail "A" taken from Figure 4, highlighting the method of joining the tubular modules according to the invention;
- Figures 7 and 8 show details in cross section of the joined tubular elements, in which the annular release clamp is located, respectively, in a non-interfering position and in an interfering position with the lock crown, the latter causing the release of the stop means;
- Figure 9 shows a variant embodiment of the annular release clamp with respect to the one illustrated in Figure 6.

### DESCRIPTION OF AN EMBODIMENT OF THE INVENTION

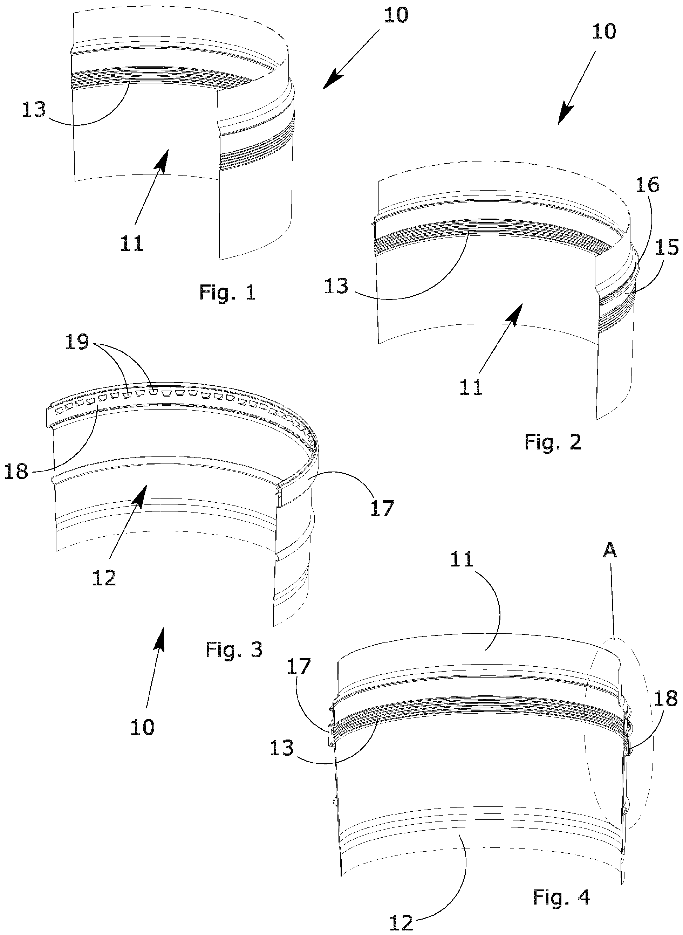

With reference to the accompanying drawings, and initially in particular to Figure 1, the numeral 10 denotes in its entirety one of the tubular modules which make up, together with other equal tubular modules, a duct for the outflow of fumes and/or gases.

The tubular elements are preferably made of metal material, and in particular of stainless steel (in other variants they might be made of other materials, such as plastic, ...) and each of their ends is machined by pressing to obtain different shapes from one end to the other, in such a way as to allow the mutual coupling.

Figures 1 and 2 show a male end 11 of the tubular element 10, which has a shape designed to couple with the female end 12 of the adjacent tubular element shown in Figure 3, which is located at the opposite end relative to that of the male end.

The male end 11 is equipped with a plurality of annular corrugations 13 which are positioned consecutively on the same shared central axis of the tubular element. There may be any number of corrugations and at least one.

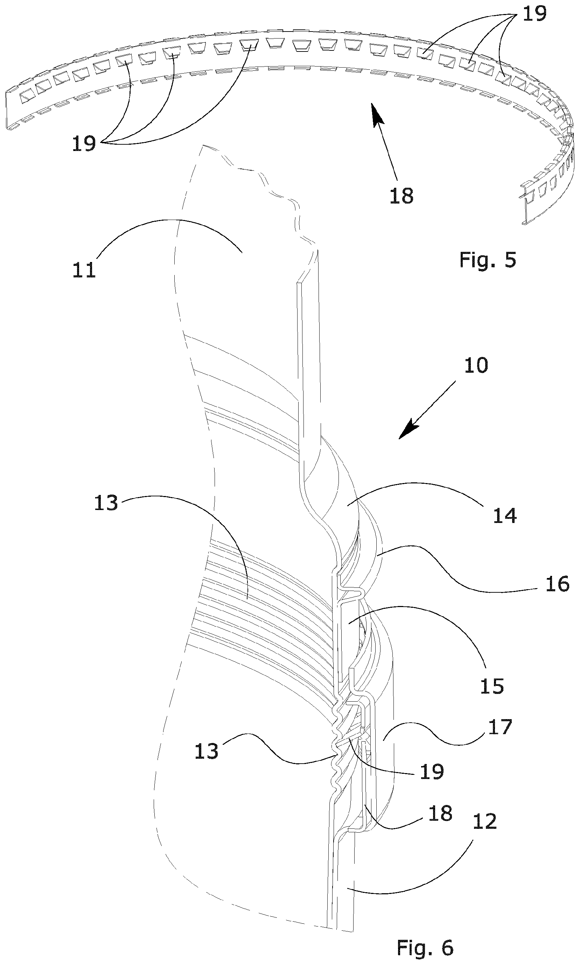

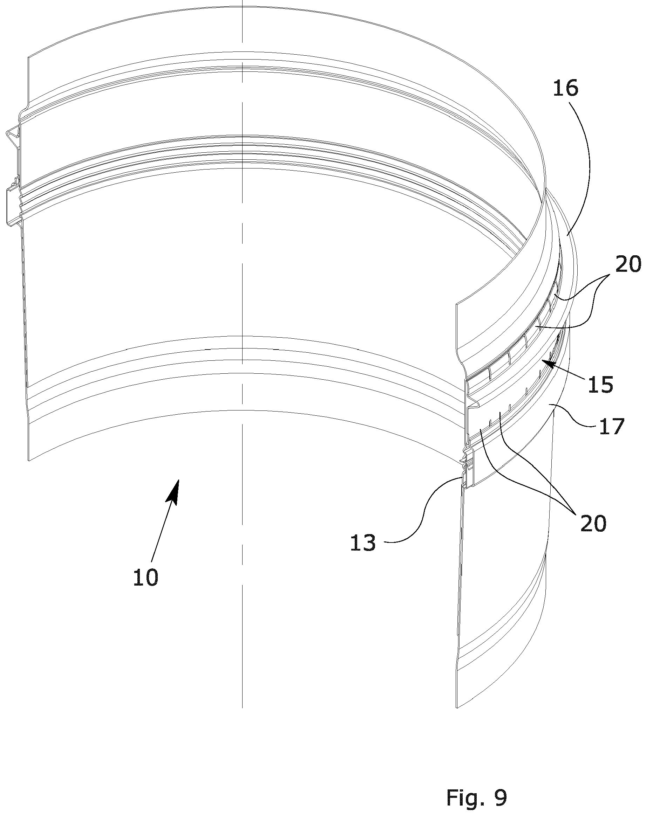

Between the annular corrugations 13 and a convexity 14 made in a sector located upstream in an axial direction of escape of the fumes of the tubular element 10, there is an annular seat designed to house a release clamp 15 designed for the purposes described below. The release clamp comprises a raised rib 16 designed to be gripped to exert a thrust by pressing in a longitudinal direction, causing the movement from a withdrawn position to an advanced one.
It should be noted that the release clamp 15 in a first variant (Figure 6) is shaped to match the outside of the tubular element 10 and it is ring open in such a way as to have sufficient elasticity to overcome the annular corrugations 13 during the locking operation. In a second variant (Figure 9) the release clamp 15 is a closed loop and has a plurality of elastic tabs 20 inclined towards the tubular element 10. In other words, the elastic tabs 20 keep the rest of the clamp 15 spaced from the tubular element 10. In this way, the deformation of the elastic tabs 20 towards the outside allows the clamp to pass over the annular corrugations 13 during the locking operation. Preferably, the elastic tabs 20 are defined by notches made on the clamp 15.

The female end of the tubular element has, as shown in Figure 3, an annular border (or groove) 17 which inside forms a seat for housing a crown 18 equipped with a plurality of elastic teeth 19 located at regular intervals. The annular border 17 may define, at the same time, the anti-capillarity convexity.

The teeth 19 are positioned in positions offset from each other along a direction parallel to a central axis of the module 10. In other words, the teeth 19 are located at different heights along the direction parallel to the central axis of the module 10. In this way, it is advantageously possible to obtain a progressive connection of the male end 11 inside the female end 13.

It should be noted that the crown 18 equipped with elastic teeth 19 is inserted inside the female end and the teeth 19 are positioned in the direction of inserting the male component allowing its advance until the teeth 19 of the crown interfere with the annular corrugations 13 of the male component 11 penetrating into the dips, causing the block which prevents the withdrawal of the male component itself relative to its direction of inserting in the female end.

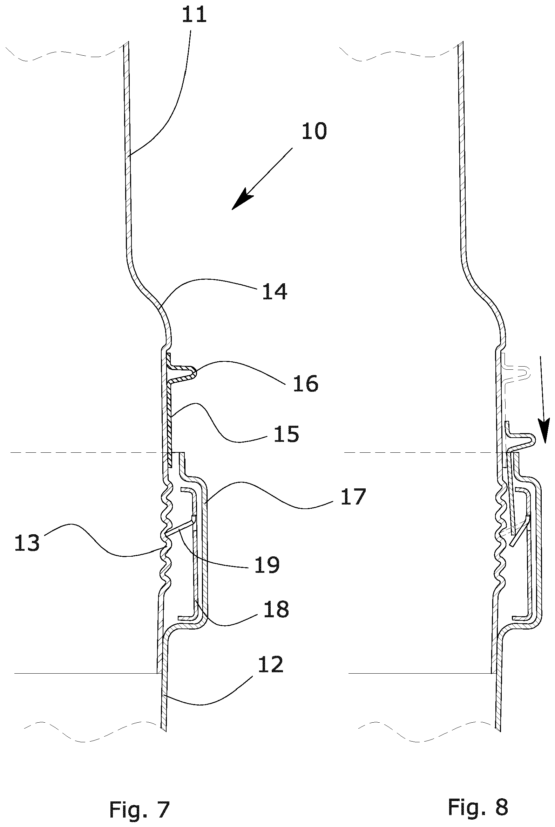

It may be noted in Figures 6, 7 and 8 that between the male component 11 and the edge located at the end of the female sector there is a space which may entered by the release clamp 15 during its movement imparted manually (either directly or by means of a tool) by the operator in the cases in which it is necessary to proceed with the release.

This invention also relates to a tubular module 10 comprising an inner pipe and an outer pipe between which there is insulating material. The tubular module is commonly defined as "double wall". The connection system according to this invention is applied to the inner pipe and/or to the outer pipe of the tubular module 10.

The system according to the invention allows a duct to be made for the evacuation of fumes and/or gases comprising a plurality of tubular modules inserted one inside another, each of which comprises a male end 11 opposite to a female end 12.

The male end 11 and the female end 12 of each tubular element have a cone-shaped area which defines a narrowing of the inner section towards a same direction parallel to an axis of the tubular element. It should be noted that the region shaped in the form of a cone defines firstly a widening relative to the rest of the tubular module and then defines a narrowing of the region towards the direction indicated above.

More specifically, the cone-shaped area of the female end 12 is positioned upstream of the annular border 17 according to an axial direction which goes towards the border of the female end 12, and the cone-shaped area of the male end 11 is positioned upstream of the protrusions according to an axial direction extending towards the edge of the male end 11.

From an operational point of view, for the assembly of the duct for the evacuation of fumes and/or gases it is sufficient to insert each male end of each tubular element in the respective female end of each adjacent tubular element, in such a way that the corrugations 13 reach the elastic teeth 19 in such a way as to form a gripping between the teeth and the corrugations, obtaining a connection with the complete locking of the components.

If it were necessary to release one or more of the components fitted, a pressure is exerted on the release clamp 15, which, sliding in the gap between the two tubular elements, determines a movement towards the outside of the elastic teeth 19 with the consequent release from the annular corrugations allowing the release between the two tubular elements affected, which may in this way be disassociated from each other. In other words, the teeth 19 withdraw towards the inside of the annular seat of the female end 12.

## Claims

1. A duct for the evacuation of fumes and/or gases comprising at least two tubular modules inserted one inside another in which a male end (11) of a tubular element (10) has a shape designed to couple with a female end (12) of the other adjacent tubular element located at the opposite end relative to that of the male end (11); the duct comprising a connection system between the modules (10), where the modules consist of tubular elements, each of which comprises the male end (11) opposite to the female end (12) of the other adjacent tubular element; the connection system comprising an annular border (17), forming an inner annular seat, made at the female end (12) in such a way as to form a recess relative to an inner surface of the module (10); the system also comprising a crown gear (18) configurable between a condition of use wherein it is inserted inside the annular seat of the border (17) and a rest condition wherein it is separated from the border (17); the crown gear (18) being equipped with a plurality of teeth (19) elastically deformable and protruding inside the module (10) in such a way as to grip, during the condition of use, on an outer surface of a male end (11) of a further module inserted in the female end (12) of a first module so as to form a mechanical coupling between the two modules (10), wherein the male end (11) and the female end (12) have respective cone-shaped areas; each area forming an inner section narrowing towards a same direction parallel to an axis of the same tubular module.

2. The duct according to claim 1, **characterised in that** the cone-shaped area of the female end (12) is positioned upstream of the annular border (17) according to an axial direction which goes towards the border of the female end (12).

3. The duct according to any one of the preceding claims, **characterised in that** the teeth (19) are folded towards the inside of the module (10) and are oriented in the direction of introduction of the male end (11) of the further module towards the female end (12) of the first module (10) so as to prevent the male end (11) from coming out of the female end (12).

4. The duct according to any one of the preceding claims, **characterised in that** the teeth (19) are positioned in positions offset from each other along a direction parallel to a central axis of the module (10) .

5. The duct according to any one of the preceding claims, **characterised in that** the connection system comprises one or more protrusions obtained on the outer surface of the male end (11) and configured to come in contact with the teeth (19) of the female end (12) so as to promote the coupling between the two modules (10).

6. The duct according to claim 5, **characterised in that** the cone-shaped area of the male end (11) is positioned upstream of the protrusions according to an axial direction which goes towards the border of the male end (11).

7. The duct according to claim 5 or 6, **characterised in that** such protrusions comprise a plurality of annular corrugations (13) positioned consecutively and concentrically according to a same common central axis of the module (10).

8. The duct according to any one of the preceding claims, **characterised in that** the connection system comprises a release clamp (15) located outside the module (10) and which can be translated from a retracted position to an advanced position in which it is inserted between the male end (11) and the female end (12) of two respective modules (10) coupled to one another, and is configured to interfere with the teeth (19).

## Patentansprüche

1. Leitung zur Abführung von Rauchgasen und/oder Gasen, umfassend mindestens zwei rohrförmige Module, die ineinander eingefügt sind, bei denen ein Steckende (11) eines rohrförmigen Elements (10) eine Form aufweist, die ausgestaltet ist, um mit einem Aufnahmeende (12) des anderen angrenzenden rohrförmigen Elements, das sich am entgegengesetzten Ende und relativ zu dem des Steckendes (11) befindet, gekuppelt zu werden, wobei die Leitung ein Verbindungssystem zwischen den Modulen (10) umfasst, wobei die Module aus rohrförmigen Elementen bestehen, von denen ein jedes das Steckende (11), das dem Aufnahmeende (12) des anderen angrenzenden rohrförmigen Elements entgegengesetzt angeordnet ist, umfasst, wobei das Verbindungssystem einen ringförmigen Rand (17) aufweist, formend einen inneren ringförmigen Sitz, der am Aufnahmeende (12) ausgebildet ist, sodass eine Vertiefung
relativ zu einer inneren Oberfläche des Moduls (10) geformt wird, wobei das System auch einen Zahnkranz (18) umfasst, der zwischen einem Zustand der Verwendung, in dem er in den ringförmigen Sitz des Rands (17) eingefügt ist, und einem Ruhezustand, in dem er vom Rand (17) getrennt ist, konfigurierbar ist, wobei der Zahnkranz (18) mit einer Vielzahl an Zähnen (19) ausgestattet ist, die elastisch verformbar sind und in das Modul (10) ragen, sodass sie während des Zustands der Verwendung auf einer äußeren Oberfläche eines Steckendes (11) eines weiteren Moduls greifen, das in das Aufnahmeende (12) eines ersten Moduls eingefügt ist, sodass eine mechanische Kupplung zwischen den zwei Modulen (10) geformt wird,
wobei das Steckende (11) und das
Aufnahmeende (12) jeweilige kegelförmige Bereiche aufweisen, wobei ein jeder Bereich einen Innenteil bildet, der hinführend zu einer selben Richtung schmäler wird, parallel zu einer Achse desselben rohrförmigen Moduls.

2. Leitung nach Anspruch 1, **dadurch gekennzeichnet, dass**
der kegelförmige Bereich des Aufnahmeendes (12) stromaufwärts des ringförmigen Rands (17) positioniert ist, nach einer axialen Richtung, die zum Rand des Aufnahmeendes (12) führt.

3. Leitung nach einem der vorhergehenden Ansprüche, **dadurch gekennzeichnet, dass** die Zähne (19) hinführend zur Innenseite des Moduls (10) gebördelt und in die Einführungsrichtung des Steckendes (11) des weiteren Moduls hinführend zum Aufnahmeende (12) des ersten Moduls (10) ausgerichtet sind, sodass verhindert wird, dass das Steckende (11) aus dem Aufnahmeende (12) austritt.

4. Leitung nach einem der vorhergehenden Ansprüche, **dadurch gekennzeichnet, dass** die Zähne (19) in Positionen positioniert sind, die entlang einer Richtung, die parallel zu einer mittigen Achse des Moduls (10) verläuft, versetzt sind.

5. Leitung nach einem der vorhergehenden Ansprüche, **dadurch gekennzeichnet, dass** das Verbindungssystem einen oder mehrere Vorsprünge umfasst, die auf der äußeren Oberfläche des Steckendes (11) ausgebildet und ausgelegt sind, um mit den Zähnen (19) des Aufnahmeendes (12) in Kontakt zu kommen, sodass die Kupplung zwischen den zwei Modulen (10) gefördert wird.

6. Leitung nach Anspruch 5, **dadurch gekennzeichnet, dass**
der kegelförmige Bereich des Steckendes (11) stromaufwärts der Vorsprünge nach einer axialen Richtung positioniert ist, die hinführend zum Rand des Steckendes (11) verläuft.

7. Leitung nach Anspruch 5 oder 6, **dadurch gekennzeichnet, dass** derartige Vorsprünge eine Vielzahl an ringförmigen Riffelungen (13) umfassen, die nacheinander und konzentrisch gemäß einer selben gemeinsamen mittigen Achse des Moduls (10) positioniert sind.

8. Leitung nach einem der vorhergehenden Ansprüche, **dadurch gekennzeichnet, dass** das Verbindungssystem eine Freigabeklammer (15) umfasst, die sich außerhalb des Moduls (10) befindet und die von einer eingezogenen Position in eine vorgeschobene Position verschoben werden kann, in der sie zwischen dem Steckende (11) und dem Aufnahmeende (12) zweier jeweiliger Module (10) eingefügt wird, die miteinander gekuppelt sind, und ausgelegt ist, um mit den Zähnen (19) zu interferieren.

## Revendications

1. Conduit pour l'évacuation de fumées et/ou de gaz comprenant au moins deux modules tubulaires insérés l'un dans l'autre dans lequel une extrémité mâle (11) d'un élément tubulaire (10) possède une forme conçue pour s'accoupler à une extrémité femelle (12) de l'autre élément tubulaire adjacent située à l'extrémité opposée par rapport à celle de l'extrémité mâle (11) ; le conduit comprenant un système de connexion entre les modules (10), dans lequel les modules consistent en des éléments tubulaires, chacun comprenant l'extrémité mâle (11) opposée à l'extrémité femelle (12) de l'autre élément tubulaire adjacent ; le système de connexion comprenant une bordure annulaire (17), formant un siège annulaire, réalisée en correspondance de l'extrémité femelle (12)
de sorte à former un renfoncement
par rapport à une surface interne du module (10) ; le système comprenant aussi une roue plate (18) pouvant être configurée entre une condition d'utilisation dans laquelle elle est introduite à l'intérieur du siège annulaire de la bordure (17) et une condition de repos dans laquelle elle est séparée de la bordure (17) ; la roue plate (18) étant équipée d'une pluralité de dents (19) pouvant se déformer élastiquement et dépassant à l'intérieur du module (10) de manière à ce qu'elles puissent saisir, pendant la condition d'utilisation, sur une surface extérieure d'une extrémité mâle (11) d'un module supplémentaire introduit dans l'extrémité femelle (12) d'un premier module de sorte à former un accouplement mécanique entre les deux modules (10),
dans lequel l'extrémité mâle (11) et
l'extrémité femelle (12) comportent des zones coniques respectives ; chaque zone formant une section interne se rétrécissant vers une même direction parallèle à un axe du même module tubulaire.

2. Conduit selon la revendication 1, **caractérisé en ce que**
la zone conique de l'extrémité femelle (12) est positionnée en amont de la bordure annulaire (17) selon une direction axiale allant vers la bordure de l'extrémité femelle (12).

3. Conduit selon l'une quelconque des revendications précédentes, **caractérisé en ce que** les dents (19) sont repliées vers l'intérieur du module (10) et sont orientées dans la direction d'introduction de l'extrémité mâle (11) du module supplémentaire vers l'extrémité femelle (12) du premier module (10) de manière à empêcher l'extrémité mâle (11) de sortir de l'extrémité femelle (12).

4. Conduit selon l'une quelconque des revendications précédentes, **caractérisé en ce que** les dents (19) sont positionnées dans des positions décalées les unes par rapport aux autres le long d'une direction parallèle à un axe central du module (10).

5. Conduit selon l'une quelconque des revendications précédentes, **caractérisé en ce que** le système de connexion comprend une ou plusieurs saillies obtenues sur la surface extérieure de l'extrémité mâle (11) et configurées pour se mettre au contact des dents (19) de l'extrémité femelle (12) de manière à promouvoir la connexion entre les deux modules (10).

6. Conduit selon la revendication 5, **caractérisé en ce que** la zone conique de l'extrémité mâle (11) est positionnée en amont des saillies selon une direction axiale allant vers la bordure de l'extrémité mâle (11).

7. Conduit selon la revendication 5 ou 6, **caractérisé en ce que** lesdites saillies comprennent une pluralité de cannelures annulaires (13) positionnées consécutivement et concentriquement selon un même axe central commun du module (10).

8. Conduit selon l'une quelconque des revendications précédentes, **caractérisé en ce que** le système de connexion comprend un collier de desserrage (15) situé à l'extérieur du module (10) et pouvant avoir une translation d'une position rétractée à une position avancée dans laquelle il est inséré entre l'extrémité mâle (11) et l'extrémité femelle (12) des deux modules (10) respectifs couplés l'un à l'autre, et configuré pour interférer avec les dents (19).
